(19)

**Europäisches Patentamt**
**European Patent Office**
**Office européen des brevets**

(11)     **EP 2 869 630 B1**

(12)     **EUROPEAN PATENT SPECIFICATION**

(45) Date of publication and mention
of the grant of the patent:
**23.03.2016 Bulletin 2016/12**

(51) Int Cl.:
**H04W 36/00** *(2009.01)*          *H04W 48/20* *(2009.01)*
**H04W 84/04** *(2009.01)*

(21) Application number: **13306500.3**

(22) Date of filing: **31.10.2013**

(54) **Methods, apparatuses and computer program product for determining an offset for a cell selection procedure.**

Verfahren, Vorrichtungen und Computerprogrammprodukt zur Verschiebungsbestimmung von einem Zellselektionsverfahren.

Procédés, appareils et produit de programme informatique pour déterminer un décalage pour une procédure de sélection de cellules.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.05.2015 Bulletin 2015/19**

(73) Proprietor: **ALCATEL LUCENT**
**92100 Boulogne-Billancourt (FR)**

(72) Inventors:
• **Puddle, Nicola**
**Swindon, Wiltshire SN5 7DJ (GB)**
• **Wong, Shin Horng**
**Swindon, Wiltshire SN5 7DJ (GB)**
• **Brend, Graham**
**Swindon, Wiltshire SN5 7DJ (GB)**

(74) Representative: **Berthier, Karine**
**Alcatel-Lucent**
**148/152, route de la Reine**
**92100 Boulogne-Billancourt (FR)**

(56) References cited:
**WO-A1-2012/142876     US-A1- 2013 084 864**

• **"3rd Generation Partnership Project; Technical Specification Group Radio Access Network; Study on UMTS heterogeneous networks (Release 12)", 3GPP STANDARD; 3GPP TR 25.800, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.0.0, 20 September 2013 (2013-09-20), pages 1-131, XP050712697, [retrieved on 2013-09-20]**
• **ALCATEL-LUCENT: "HetNet - Decentralised Biasing", 3GPP DRAFT; R3-131302-DECENTRALISEDBIASING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Barcelona, Spain; 20130819 - 20130823 9 August 2013 (2013-08-09), XP050719460, Retrieved from the Internet: URL:http://www.3gpp.org/ftp/tsg_ran/WG3_lu /TSGR3_81/Docs/ [retrieved on 2013-08-09]**

EP 2 869 630 B1

- ALCATEL-LUCENT ET AL: "Bias optimisation in heterogeneous networks", 3GPP DRAFT; R1-130929 - REL-12 UMTS HETNET - BIAS OPTIMISATION V0.3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG1, no. Chicago, USA; 20130415 - 20130419 6 April 2013 (2013-04-06), XP050696928, Retrieved from the Internet: URL:http://www.3gpp.org/ftp/tsg_ran/WG1_RL 1/TSGR1_72b/Docs/ [retrieved on 2013-04-06]

- ALCATEL-LUCENT: "Cell Range Expansion", 3GPP DRAFT; R2-140615 CRE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20140210 - 20140214 9 February 2014 (2014-02-09), XP050737752, Retrieved from the Internet: URL:http://www.3gpp.org/ftp/Meetings_3GPP_ SYNC/RAN/RAN2/Docs/ [retrieved on 2014-02-09]

**Description**

FIELD OF THE INVENTION

Aspects and embodiments described provide wireless telecommunications network node cell selection bias methods, network nodes and computer program products operable to perform those methods.

BACKGROUND

Wireless telecommunication networks are known. In such networks, network connectible devices (for example, mobile telephones or tablets) are operable to communicate with base stations provided by network operators. In known wireless telecommunication networks, radio coverage is provided to network connectible devices in geographical areas typically known as cells. A base station is located in each cell to provide radio coverage. Network connectible devices in each cell are operable to receive information and data from the base station and to transmit data and information to the base station.

Network connectible devices roam through a wireless communications network. Base stations are provided which support areas of radio coverage as described above. A number of those base stations are provided and are distributed geographically in order to provide a wide area of coverage to network connectible devices.

When network connectible devices such as user equipment are within an area served by a base station, communications may be established between user equipment and a base station using associated radio links. Traditional base stations provide coverage in relatively large geographical areas and such base stations are often referred to as macro base stations and support macro cells of radio coverage. It is possible to provide a heterogeneous network (HetNet) where smaller sized cells are provided within macro cells. Such smaller sized cells can be referred to as micro cells, pico cells or femto cells. One way to establish a small cell is to provide a small cell base station or "low power node" (LPN) which is operable to provide radio coverage having relatively limited range within the coverage area of the macro cell. The transmission power of a low power node is relatively low and each low power node tends to support small cells which provide a small coverage area compared to that of a macro cell.

Small radio cells of coverage are typically provided where communications coverage provided by a macro cell is poor, where a user wishes to use an alternative communications link provided locally, and/or to increase capacity within a network.

Deployment of small cells in a wireless communication network can assist a network operator in relation to handling capacity in high traffic areas; for example, so-called hotspot areas. An ability to offload traffic to a small cell or cells located in a high traffic area of a network may be particularly useful to a network operator.

Although HetNet deployments may offer advantages, unexpected consequences of such deployments may occur. It is desired to provide techniques which may be used to address those consequences.

3rd Generation Partnership Project: Technical Specification Group Radio Access Network, Study on UMTS heterogeneous networks (Release 12); 3GTPP Standard; 3GPP TR 25.800; 3rd Generation Partnership Project (3GPP) Mobile Competence Centre; 650, Route des Lucioles, F-06921 Sophia-Antipolis Cedex; France, Vol. RAN WG1, no. V12.0.0 describes decentralised biasing in the context of HetNet arrangements where capacity gain in a network is increased by offloading traffic from a macro cell to a low power node. The offloading can be increased by biasing user equipment to hand over to a low power node at an earlier stage by increasing Cell Individual Offset (CIO). It states that optimising biasing values according to the condition of each cell can be beneficial, and that the biasing value maybe further optimised accounting for user equipment receiver capacity and/or capability in addressing interference.

WO 2012/142876 describes an uplink intra-frequency load balancing method. The uplink intra-frequency load balancing can be performed by adjusting a beam direction of user equipment. In one described embodiment, call specific offset represents cell load level. User equipment load balancing apparatus is operable to determine beam-forming capability of user equipment, based on beam-forming gain of the user equipment. If the user equipment is capable of closed loop beam forming, that user equipment may be conditionally allowed to contribute to uplink load balancing. The user equipment can steer a beam direction of the user equipment to a less loaded cell, so the load of the cell may be appropriately increased to contribute to uplink load balancing.

SUMMARY

Accordingly, a first aspect provides a method of applying user equipment cell selection bias in a wireless communication network, the method comprising: determining at user equipment, for a cell in the wireless communication network, an indication of cell selection bias associated with a user equipment antenna configuration based on an indication of cell selection bias received from a network control node; assessing at said user equipment, antenna configuration being implemented by the user equipment; and applying, at said user equipment, a cell selection bias in dependence upon the implemented antenna configuration, and wherein the indication of cell selection bias comprises an offset to be applied in the case of each user equipment antenna configuration.

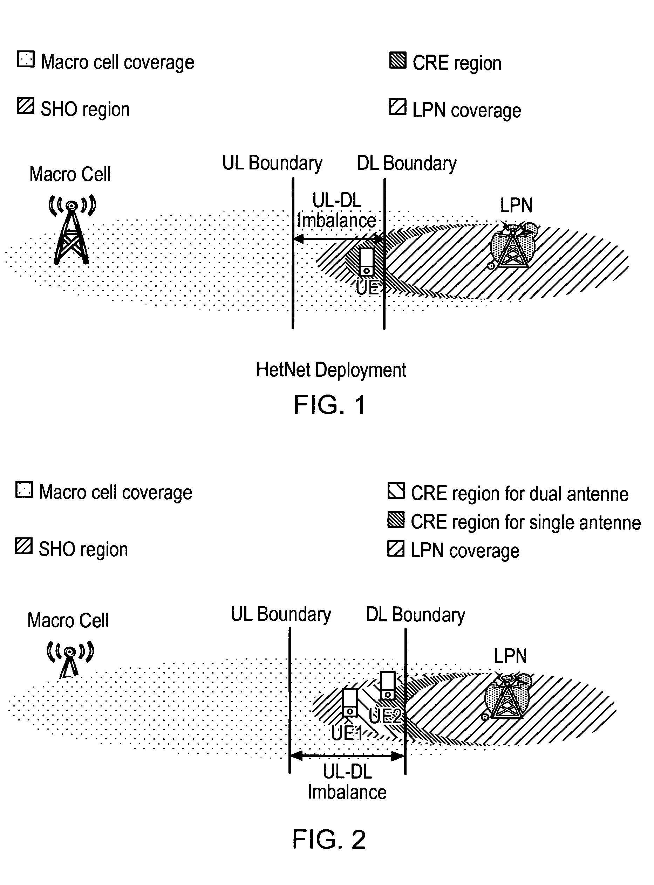

The first aspect recognises that in wireless communications network deployments, for example, a HetNet deployment, such as that illustrated in Figure 1 which shows a macro cell and a small cell, an uplink (UL) boundary occurs where user equipment uplink path loss to the macro base station and the small cell base station is essentially the same. A downlink (DL) boundary occurs where the received pilot power from a macro base station and the received pilot power from the small cell base station are substantially identical at user equipment. In a homogeneous network (ie, a macro cell only deployment or a small cell only deployment), the uplink and downlink boundaries tend to be substantially coincident and occur at approximately the same geographical location within the network. However, in a HetNet deployment a small cell base station typically has a lower transmit power than a macro cell base station. As a consequence, the uplink and downlink boundaries tend to differ, as shown in Figure 1. The region between the uplink and downlink boundaries is referred to as the uplink-downlink imbalance region. If user equipment is served by the macro cell base station and enters the uplink-downlink imbalance region as shown in Figure 1, that user equipment will typically create strong interference within the small cell supported by the small cell base station. Such a scenario is applicable in both LTE and UMTS radio access technologies. In UMTS, the strong uplink interference will occur unless the user equipment is operating in a soft handover mode within a soft handover region.

The first aspect recognises that cell range expansion (CRE) which can be implemented in a range of network deployments, can be of particular use in a HetNet deployment. Cell range expansion is a known technique in UMTS networks. Cell range expansion is a technique according to which handover of user equipment operating in, for example, a macro cell can be biased towards a low power node by setting a bias, known as a cell individual offset (CIO) appropriately in relation to the low power node. According to such technique, user equipment operates to measure received signal strength from a low power node and then apply a bias, essentially making the received signal strength appear greater than it is in actuality. Such technique also acts to essentially broaden a region of coverage supported by a low power node without actively increasing the transmit power of that low power node. Although user equipment in the expanded or CRE region are likely to suffer from high interference from the macro if they perform an early handover to the low power node, it is possible that additional capacity offered by the low power node can lead to overall system throughput gain. Accordingly, using cell range expansion techniques to bias user equipment towards selection of low power nodes is a technique employed by many network operators.

It will be appreciated that there are both advantages and disadvantages to implementing cell range expansion within a network. The amount of biasing may depend upon the traffic load at the low power node and the macro. As a result, the decentralised biasing method may be used, according to which the amount of bias to be applied by user equipment can be changed in a semi-dynamic way based upon the loading of a cell or cells of the network. Such semi-dynamic decentralised biasing may perform better than a fixed uniform biasing method applied across a whole network.

The first aspect recognises that cell range expansion and the applicability of biasing techniques used in cell range expansion may depend upon user equipment capabilities. It has, for example, been found that for user equipment having multiple receive antennae, it is possible to use a greater cell individual offset figure since user equipment having multiple receive antennae are often able to receive signalling from a network better than those user equipment having fewer reception antennae. It has, for example, been found that it is possible to operate at a cell individual offset of 9 dB in relation to dual antenna UMTS user equipment. It is possible that problems may be caused within a network if implementing a cell individual offset greater than 6 dB in a single reception antenna case, and 9 dB in a dual antenna case.

Typically, a bias value for a particular cell is set to be the same for all user equipment, irrespective of user equipment capability. That is to say, all user equipment, irrespective of their antenna configuration has the same CIO value. That CIO value may be set for homogenous CIO or for decentralised cell range expansion techniques. The first aspect recognises that, given the difference in possible maximum biasing values between user equipment having different reception antenna capabilities, it can be beneficial to deploy a cell range expansion technique which accounts for differing user equipment antenna capabilities.

The first aspect provides a wireless communication network user equipment cell selection bias method. That method may be used to implement cell range expansion techniques within a wireless communication network. The method may be implemented such that two (or more) cell individual offset values may be known to user equipment operating within a cell of a network. The biasing value, or cell individual offset value, applied by user equipment in a cell may be selected on the basis of user equipment antenna capability. More specifically, a biasing value may be selected in dependence upon the antenna configuration actually being used by user equipment within such a cell.

The method may comprise: determining, for a cell in the wireless communication network, an indication of cell selection bias associated with a user equipment antenna configuration. That determining may comprise: receiving messaging from a network control node. That determining may comprise reading information sent to user equipment as part of an active set update.

The method may comprise: assessing antenna configuration being implemented by the user equipment. User equipment may be operable to autonomously change its utilised antenna configuration. User equipment having multiple antenna may choose to use only a subset of available antenna to save power, for example. User equipment may have dual antenna, for example, and choose to only use one. Similarly, user equipment may comprise multiple antenna and choose only to use a subset of those antenna. Similarly, user equipment may determine using more antenna may be beneficial and switch, from an antenna configuration using a single, to a configuration using two or more antenna, if available. The method of the first aspect may provide an indication of a cell biasing value to be applied for each of various available antenna configurations. The method may comprise: applying a cell selection bias in dependence upon the implemented antenna configuration. Once user equipment has determined an implemented antenna configuration, it may be operable to apply a corresponding cell selection bias in relation to measurements received from the cell to perform cell range expansion as appropriate.

In one embodiment, the indication of cell selection bias is associated with a multiple antenna user equipment antenna configuration. Accordingly, depending upon an antenna configuration being used by user equipment, an appropriate biasing offset may be applied by user equipment. User equipment using multiple antennas may be able to successfully decode more weakly received signals from a cell, so a greater cell bias may be successfully applied, allowing handover to an alternative cell to be performed successfully in circumstances which may be inappropriate for user equipment using a single antenna.

The indication of cell selection bias comprises offset to be applied in the case of each user equipment antenna configuration. Accordingly, the method may be such that a specific cell biasing value to be applied for each antenna configuration may be specifically or explicitly set and signalled to user equipment. In some embodiments, that indication may comprise an offset value to be applied by user equipment. The offset value may be positive or negative and may be applied in addition to, or instead of, a general offset being applied by user equipment within a network.

In one embodiment, the cell comprises a cell supported by a low power node in the wireless communication network. Accordingly, a cell selection bias may be associated with a particular cell type within a network. A cell supported by a low power node may be such that multiple cell selection bias values may be implemented, in dependence upon used user equipment antenna configuration.

A second aspect provides a computer program product operable, when executed on a computer, to perform the method of the first aspect.

A third aspect provides user equipment operable to implement a cell selection bias method in a wireless communication network; the user equipment comprising: bias logic operable to determine, for a cell in the wireless communication network, an indication of cell selection bias associated with a user equipment antenna configuration based on an indication of cell selection bias received from a network control node; configuration logic operable to assess antenna configuration being implemented by the user equipment; and implementation logic operable to apply a cell selection bias in dependence upon the implemented antenna configuration, and wherein the indication of cell selection bias comprises an offset to be applied in the case of each user equipment antenna configuration.

In one embodiment, the indication of cell selection bias is associated with a multiple antenna user equipment antenna configuration.

The indication of cell selection bias comprises offset to be applied in the case of each user equipment antenna configuration.

In one embodiment, the cell comprises a cell supported by a low power node in the wireless communication network.

A fourth aspect provides a method of communicating an indication of cell selection bias from a wireless communication network control node to user equipment, the method comprising: determining at the network control node, for a cell in the wireless communication network, an indication of cell selection bias associated with a user equipment antenna configuration; and communicating the indication of cell selection bias from the network control node to user equipment operating in the wireless communication network, and wherein the indication of cell selection bias comprises an offset to be applied in the case of each user equipment antenna configuration

The fourth aspect recognises that a network control node may be operable to inform user equipment of cell selection bias values to be applied. A network control node may be operable to calculate and determine an appropriate cell selection bias to be applied in respect of a cell within a network. The network control node may comprise an RNC, eNodeB, NodeB, Low Power Node or similar.

In one embodiment, communicating comprises: transmitting a broadcast message to user equipment operating in the wireless communication network. Accordingly a network control node may be operable to transmit a broadcast message including cell selection bias values to be applied by user equipment operating within that cell. In some embodiments, the broadcast message may include information for adjacent cells.

In one embodiment, the method comprises: receiving an indication of antenna configuration capability of the user equipment and communicating the indication of cell selection bias to user equipment operating in the wireless communication network in dependence upon the antenna configuration capability of the user equipment. In one embodiment, communicating comprises: transmitting a common message to user equipment operating in the wireless communication network to user equipment determined to have multiple antenna configuration capability. Accordingly, cell selection bias information may only be transmitted to those user equipment within a network which make use of such information.

In one embodiment, the method comprises: receiving an indication of antenna configuration being implemented by the user equipment, and communicating the indication of cell selection bias to user equipment operating in the wireless communication network in dependence upon the antenna configuration being implemented by the user equipment. In one embodiment, communicating comprises: transmitting dedicated messaging to user equipment determined to be operating in the wireless communication network with a particular user equipment antenna configuration. Accordingly, when user equipment notifies a network of a change in antenna configuration in terms of its chosen operation, the network may respond by sending an updated cell selection bias value to apply in respect of a cell.

A fifth aspect provides a computer program product operable, when executed on a computer, to perform the method of the fourth aspect.

A sixth aspect provides a control node operable to implement a cell selection bias method in a wireless communication network, said network control node comprising: biasing logic operable to determine, for a cell in the wireless communication network, an indication of cell selection bias associated with a user equipment antenna configuration; and communication logic operable to communicate the indication of cell selection bias to user equipment operating in the wireless communication network, and wherein the indication of cell selection bias comprises an offset to be applied in the case of each user equipment antenna configuration.

In one embodiment, the communication logic is operable to transmit a broadcast message to user equipment operating in the wireless communication network.

In one embodiment, the control node comprises reception logic operable to receive an indication of antenna configuration capability of the user equipment and the communication logic is operable to communicate the indication of cell selection bias to user equipment operating in the wireless communication network in dependence upon the antenna configuration capability of the user equipment.

In one embodiment, the communication logic is operable to transmit a common message to user equipment operating in the wireless communication network to user equipment determined to have multiple antenna configuration capability.

In one embodiment, the control node comprises reception logic operable to receive an indication of antenna configuration being implemented by the user equipment, and the communication logic is operable to communicate the indication of cell selection bias to user equipment operating in the wireless communication network in dependence upon the antenna configuration being implemented by the user equipment.

In one embodiment, the communication logic is operable to transmit dedicated messaging to user equipment determined to be operating in the wireless communication network with a particular user equipment antenna configuration.

Further particular and preferred aspects are set out in the accompanying independent and dependent claims. Features of the dependent claims may be combined with features of the independent claims as appropriate, and in combinations other than those explicitly set out in the claims. Similarly, features and embodiments described in relation to one aspect may be combined with other aspects as appropriate, and in combinations other than those explicitly set out above.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates user equipment in a cell range expansion region of a HetNet; and
Figure 2 illustrates schematically user equipment in a cell range expansion region according to one embodiment.

DESCRIPTION OF THE EMBODIMENTS

Overview

Before discussing the embodiments in any more detail, first an overview will be provided.

Aspects and embodiments introduce a mechanism to manage the biasing values (for example, cell individual offset values) such that they are relevant to a particular user equipment capability; for example, the antenna mode of user equipment.

User equipment which are configured to support operation using two reception antennas (for example, user equipment support between dual antennas in a UMTS network) may be operable to autonomously and unilaterally alter their antenna configuration to use either dual or a single antenna. Although dual antenna mode may offer improved reception, operating in a single antenna mode can improve battery life of user equipment in comparison to a dual antenna mode. Aspects and embodiments recognise that introduction of appropriate logic at both user equipment and on the network side may allow greatest flexibility to cell range expansion techniques. In particular, in some embodiments user equipment may be operable to determine itself which bias value to use in accordance with its current selection of operating mode. In other words, user equipment may be aware of a biasing value associated with various antenna configurations and can apply an appropriate value based upon its own decision regarding whether to use single, dual or multiple antennae.

Network logic may be operable to allow a network to provide additional biasing values. Those additional biasing values may relate to dual or multiple antennae user equipment. Associated logic provided at user equipment may operate to use the information provided and determine a relevant biasing value in relation to an operating mode selected by the user equipment.

In the case of dual antenna user equipment in a UMTS network, aspects and embodiments may be such that two values of a cell individual offset, and thus two cell range expansion regions may be implemented in relation to each low power node in a HetNet. One cell range expansion region is provided in relation to user equipment operating using a single antenna and a further cell range expansion region, which may essentially be larger than that provided for single antenna user equipment, may be provided for those user equipment operating using dual antenna techniques.

According to some embodiments, a network may be operable to broadcast a plurality of biasing values in relation to each cell. That plurality of biasing values may form part of a system information broadcast by a cell or, for example, may comprise a common message sent to a plurality of user equipment operating within a cell. As a result, user equipment which receive that information may be able to autonomously apply an appropriate bias or offset in dependence upon their own selected operational parameters.

In another embodiment, biasing offset may be signalled to user equipment in a common order. User equipment operating in, for example, dual antenna mode may be operable to take an appropriate offset into account when calculating a cell individual offset value for a given cell.

Aspects and embodiments may be implemented such that any additional offset generated by a network could apply to user equipment operating in a single, rather than dual, mode. In such an embodiment, the offset may be negative and may, for example, apply to those user equipment configured to support a dual antenna mode but which choose to operate in a single antenna mode.

In some embodiments, a network may be made aware of the capability and configuration of user equipment operating within the network and thus be aware of which user equipment are configured to support dual mode antenna operation. According to such embodiments, appropriate information could be signalled from user equipment to the network. According to some embodiments, individual biasing values may be signalled to user equipment on a user equipment capability basis.

In one embodiment, identification of antenna configuration could be provided in a specific capability information element associated with user equipment fundamental capability. That information may be taken into account when implementing a decentralised biasing mechanism in relation to cell range expansion. It will be appreciated that the operation of user equipment may change between single and multiple antennae configuration, the user equipment may continuously report its configuration to the network and an existing 3GPP method may be used to inform the network of such a change in configuration.

According to some embodiments, identification of user equipment antenna mode can be used by the network to send a dedicated message with an appropriate biasing value, specific to an antenna mode being supported by user equipment.

Example 1

Figure 2 illustrates schematically user equipment in a cell range expansion region according to one embodiment. In the illustrated example, a low power node (LPN) is configured to operate in accordance with aspects and embodiments described herein. That low power node broadcasts a first cell individual offset value (normal bias indication) and an additional fixed offset cell individual offset value which can be used by dual mode antennae.

In the embodiment shown in Figure 2, the following steps occur:

1. The low power node is configured to support a cell range expansion region;
2. The low power node is operable to broadcast a CIO offset value in relation to the cell range expansion region;
3. The low power node is configured to support dual antenna user equipment and to support the cell range expansion region in relation to those dual antenna mode user equipment. As a result, the low power node is operable to broadcast a specific additional CIO offset value to user equipment;
4. User equipment, UE1 and UE2, are operable to read and understand a system information broadcast message transmitted by the low power node containing both the CIO offset value for a single and dual antenna mode user equipment;

5. In the embodiment shown, UE1 is operating in dual antenna mode and thus is operable to adjust its CIO value to take into account both the CIO offset and additional dual antenna mode CIO offset being broadcast by the low power node. As a result, the cell range expansion region for the low power node as determined by UE1 has the larger diameter as shown in Figure 2;

6. In the embodiment shown, UE2 has dual antenna mode capability but is operating using only a single antenna in order to optimise its battery life. As a result, it operates to adjust its CIO value to take into account the CIO offset value broadcast by the low power node without the additional dual mode CIO offset broadcast by the LPN. As a result, the cell range expansion region associated with the low power node as determined by UE2 is the one having a smaller diameter as shown in Figure 2.

When user equipment triggers an event 1A (that is to say, when user equipment determines that a cell, in this case the low power node, is being received with a great enough strength to be added to the user equipment's active set), the following measurement equation may be triggered at user equipment (triggering condition for all other measurement quantities):

$$10 \cdot Log M_{New} + CIO_{New} \geq W \cdot 10 \cdot Log\left(\sum_{i=1}^{N_A} M_i\right) + (1-W) \cdot 10 \cdot Log M_{Best} - (R_{1a} - H_{1a}/2),$$

As a result, implementation of aspects and embodiments at user equipment may require that that equation is modified to take into account dual antenna biasing, particularly if the user equipment is operating in dual antenna mode; for example, UE1 in the example shown in Figure 2. In such an instance, $CIO_{New} = CIO_{New} + CIO_{DA}$.

Aspects and embodiments allow the biasing value used in relation to a low power node or other network node to support a cell range expansion region determined in relation to user equipment antenna mode capability.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method of applying user equipment cell selection bias in a wireless communication network, said method comprising:

Determining at user equipment, for a cell in said wireless communication network, an indication of cell selection bias associated with a user equipment antenna configuration based on an indication of cell selection bias received from a network control node;

assessing, at said user equipment, antenna configuration being implemented by said user equipment; and applying, at said user equipment, a cell selection bias in dependence upon said implemented antenna configuration, and wherein said indication of cell selection bias comprises an offset to be applied in the case of each user equipment antenna configuration.

2. A method according to claim 1, wherein said indication of cell selection bias is associated with a multiple antenna user equipment antenna configuration.

3. A method according to any preceding claim, wherein said cell comprises a cell supported by a low power node in said wireless communication network.

4. A computer program product operable, when executed on a computer, to perform the method of any one of claims 1 to 3.

5. User equipment operable to implement a cell selection bias method in a wireless communication network; said user equipment comprising:

bias logic operable to determine, for a cell in said wireless communication network, an indication of cell selection bias associated with a user equipment antenna configuration based on an indication of cell selection bias received from a network control node;

configuration logic operable to assess antenna configuration being implemented by said user equipment; and implementation logic operable to apply a cell selection bias in dependence upon said implemented antenna configuration, and wherein said indication of cell selection bias comprises an offset to be applied in the case of each user equipment antenna configuration.

6. A method of communicating an indication of cell selection bias from a wireless communication network control node to user equipment, said method comprising:

determining, at said network control node, for a cell in said wireless communication network, an indication of cell selection bias associated with a user equipment antenna configuration; and communicating said indication of cell selection bias from said network control node to user equipment operating in said wireless communication network, and wherein said indication of cell selection bias comprises an offset to be applied in the case of each user equipment antenna configuration.

7. A method according to claim 6, wherein communicating comprises:

transmitting a broadcast message to user equipment operating in said wireless communication network.

8. A method according to claim 6, comprising: receiving an indication of antenna configuration capability of said user equipment and communicating said indication of cell selection bias to user equipment operating in said wireless communication network in dependence upon said antenna configuration capability of said user equipment.

9. A method according to claim 8, wherein communicating comprises:

transmitting a common message to user equipment operating in said wireless communication network to user equipment determined to have multiple antenna configuration capability.

10. A method according to claim 6, comprising: receiving an indication of antenna configuration being implemented by said user equipment, and communicating said indication of cell selection bias to user equipment operating in said wireless communication network in dependence upon said antenna configuration being implemented by said user equipment.

11. A method according to claim 10, wherein communicating comprises:

transmitting dedicated messaging to user equipment determined to be operating in said wireless communication network with a particular user equipment antenna configuration.

12. A computer program product operable, when executed on a computer, to perform the method of any one of claims 6 to 11.

13. A control node operable to implement a cell selection bias method in a wireless communication network, said network control node comprising:

biasing logic operable to determine, for a cell in said wireless communication network, an indication of cell selection bias associated with a user equipment antenna configuration; and
communication logic operable to communicate said indication of cell selection bias to user equipment operating in said wireless communication network, and wherein said indication of cell selection bias comprises an offset to be applied in the case of each user equipment antenna configuration.

**Patentansprüche**

1. Verfahren für die Anwendung eines Zellselektions-Bias eines Benutzergeräts in einem drahtlosen Kommunikationsnetzwerk, wobei besagtes Verfahren umfasst:

beim l3enutzergerät und für eine Zelle in besagtem drahtlosem Kommunikationsnetzwerk das Bestimmen einer Zellselektions-Bias-Angabe, die assoziiert ist mit einer Benutzergeräts-Antennenkanfiiguratian auf der Grundlage einer von einem Netzwerksteuerungsknoten empfangenen Zellselektions-Bias-Angabe;
an besagtem Benutzergerät das Bewerten der von besagtem Benutzergerät implementierten Antennenkonfiguration; und
an besagtem Benutzergerät die Anwendung eines Zellselektions-Bias in Abhängigkeit von besagter implementierter Antennenkonfiguration, und wobei besagte Zellselektions-Bias-Angabe einen Versatz umfasst, der im Fall einer jeden Antennenkonfiguration von Benutzergeräten anzuwenden ist.

2. Verfahren nach Anspruch 1, wobei besagte Zellselektions-Bias-Angabe assoziiert ist mit einer Antennenkonfiguration eines Benutzergeräts mit multiplen Antennen.

3. Verfahren nach einem jeglichem der vorgenannten Ansprüche, wobei besagte Zelle eine von einem Niedrigleistungsknoten besagten drahtlosen Kommunikationsnetzwerks getragene Zelle umfasst.

4. Computerprogramm-Produkt, betreibbar für das Durchführen des Verfahrens eines beliebigen der Ansprüche 1 bis 3, wenn es auf einem Computer ausgeführt wird.

5. Benutzergerät, ausgelegt für das Implementieren eines Zellselektions-Bias-Verfahrens in einem drahtlosen Kommunikationsnetzwerk, wobei das Benutzergerät umfasst:

eine Bias-Logik, dafür ausgelegt, um für eine Zelle in besagtem drahtlosem Kommunikationsnetzwerk eine Zellselektions-Bias-Angabe zu bestimmen, die assoziiert ist mit einer Benutzergeräts-Antennenkonfiguration auf der Grundlage einer von einem Netzwerksteuerungsknoten empfangenen Zellselektions-Bias-Angabe;
eine Konfigurationslogik, ausgelegt für das Bewerten der von besagtem Benutzergerät implementierten Antennenkonfiguration; und
eine Implementierungslogik, die ausgelegt ist für die Anwendung eines Zellselektions-Bias in Abhängigkeit von besagter implementierter Antennenkonfiguration, und wobei besagte Zellselektions-Bias-Angabe einen Versatz umfasst, der im Fall einer jeden Antennenkonfiguration von Benutzergeräten anzuwenden ist.

6. Verfahren für das Kommunizieren einer Zellselektions-Bias-Angabe von einem Steuerknoten eines drahtlosen Kommunikationsnetzwerks an ein Benutzergerät, wobei besagtes Verfahren umfasst,:

an besagtem Netzwerksteuerknoten und für eine Zelle in besagtem drahtlosem Kommunikationsnetzwerk das Bestimmen einer Zellselektions-Bias-Angabe, die mit einer Benutzergeräts-Antennenkonfiguration assoziiert ist; und
das Kommunizieren besagter Zellselektions-Bias-Angabe von besagtem hletzwerksteuerknoten an besagtes, in besagtem drahtlosem Kommunikationsnetzwerk operierendes Benutzergerät, und wobei besagte Zellselektions-Bias-Angabe einen Versatz umfasst, der im Fall einer jeden Antennenkonfiguration von Benutzergeräten anzuwenden ist.

7. Verfahren nach Anspruch 6, wobei das Kommunizieren umfasst: das Übertragen einer Funknachricht an das in besagtem drahtlosem Kommunikationsnetzwerk operierende Benutzergerät umfasst.

8. Verfahren nach Anspruch 6, umfassend: das Empfangen einer Angabe zur Antennenkonfigurations-Fähigkeit besagten Benutzergeräts und das Kommunizieren besagter Zellselektions-Bias-Angabe an ein in besagtem drahtlosem Kommunikationsnetzwerk operierendes Benutzergerät in Abhängigkeit von besagter Antennenkonfigurations-Fähigkeit besagten Benutzergeräts.

9. Verfahren nach Anspruch 8, wobei das Kommunizieren umfasst: das Übertragen einer gemeinsamen Nachricht von dem in besagtem drahtlosem Kommunikationsnetzwerk operierenden Benutzergerät an das Benutzergerät, von dem bestimmt wurde, dass es eine Fähigkeit zur Konfiguration multipler Antennen hat.

10. Verfahren nach Anspruch 6, umfassend: das Empfangen einer Angabe zur von besagtem Benutzergerät implementierten Antennenkonfiguration und das Kommunizieren besagter Zellselektions-Bias-Angabe an ein in besagtem drahtlosem Kommunikationsnetzwerk operierendes Benutzergerät in Abhängigkeit von besagter, von besagtem Benutzergerät implementierten Antennenkonfiguration.

11. Verfahren nach Anspruch 10, wobei das Kommunizieren umfasst:

das Übertragen dedizierter Nachrichten an ein Benutzergerät, von dem bestimmt wurde, dass es mit einer konkreten Benutzergeräts-Antennenkonfiguration in besagtem drahtlosem Kommunikationsnetzwerk operiert.

12. Computerprogramm-Produkt, betreibbar für das Durchführen des Verfahrens eines beliebigen der Ansprüche 6 bis 11, wenn es auf einem Computer ausgeführt wird.

13. Steuerknoten, ausgelegt für das Implementieren eines Zellselektions-Bias-Verfahrens in einem drahtlosen Kommunikationsnetzwerk, wobei besagter Netzwerksteuerknoten umfasst:

eine Bias-Logik, dafür ausgelegt, um für eine Zelle in besagtem drahtlosem Kommunikationsnetzwerk eine Zellselektions-Bias-Angabe zu bestimmen, die mit einer Benutzergeräts-Antennenkonfiguration assoziiert ist; und
eine Kommunikationslogik, die ausgelegt ist für das Kommunizieren besagter Zellselektions-Bias-Angabe an besagtes, in besagtem drahtlosem Kommunikationsnetzwerk operierendes Benutzergerät, und wobei besagte Zellselektions-Bias-Angabe einen Versatz umfasst, der im Fall einer jeden Antennenkonfiguration von Benutzergeräten anzuwenden ist.

**Revendications**

1. Procédé d'application de biais de sélection de cellule d'équipement d'utilisateur dans un réseau de communication sans fil, ledit procédé comprenant :

la détermination au niveau d'un équipement d'utilisateur, pour une cellule dans ledit réseau de communication sans fil, d'une indication de biais de sélection de cellule associée à une configuration d'antenne d'équipement d'utilisateur sur la base d'une indication de biais de sélection de cellule reçue en provenance d'un noeud de commande de réseau ;
l'évaluation, au niveau dudit équipement d'utilisateur, d'une configuration d'antenne qui est mise en oeuvre par ledit équipement d'utilisateur ; et
l'application, au niveau dudit équipement d'utilisateur, d'un biais de sélection de cellule en fonction de ladite configuration d'antenne mise en oeuvre, et où ladite indication de biais de sélection de cellule comprend un décalage à appliquer dans le cas de chaque configuration d'antenne d'équipement d'utilisateur.

2. Procédé selon la revendication 1, dans lequel ladite indication de biais de sélection de cellule est associée à une configuration d'antenne d'équipement d'utilisateur à antenne multiple.

**3.** Procédé selon l'une quelconque des revendications précédentes, dans lequel ladite cellule comprend une cellule supportée par un noeud de faible puissance dans ledit réseau de communication sans fil.

**4.** Produit de programme informatique exploitable, lorsqu'il est exécuté sur un ordinateur, pour effectuer le procédé selon l'une quelconque des revendications 1 à 3.

**5.** Equipement d'utilisateur exploitable pour mettre en oeuvre un procédé de biais de sélection de cellule dans un réseau de communication sans fil ; ledit équipement d'utilisateur comprenant :

une logique de biais exploitable pour déterminer, pour une cellule dans ledit réseau de communication sans fil, une indication de biais de sélection de cellule associée à une configuration d'antenne d'équipement d'utilisateur sur la base d'une indication de biais de sélection de cellule reçue en provenance d'un noeud de commande de réseau ;
une logique de configuration exploitable pour évaluer une configuration d'antenne qui est mise en oeuvre par ledit équipement d'utilisateur ; et
une logique de mise en oeuvre exploitable pour appliquer un biais de sélection de cellule en fonction de ladite configuration d'antenne mise en oeuvre, et où ladite indication de biais de sélection de cellule comprend un décalage à appliquer dans le cas de chaque configuration d'antenne d'équipement d'utilisateur.

**6.** Procédé de communication d'une indication de biais de sélection de cellule d'un noeud de commande de réseau de communication sans fil à un équipement d'utilisateur, ledit procédé comprenant :

la détermination, au niveau dudit noeud de commande de réseau, pour une cellule dans ledit réseau de communication sans fil, d'une indication de biais de sélection de cellule associée à une configuration d'antenne d'équipement d'utilisateur ; et
la communication de ladite indication de biais de sélection de cellule dudit noeud de commande de réseau à un équipement d'utilisateur fonctionnant dans ledit réseau de communication sans fil, et où ladite indication de biais de sélection de cellule comprend un décalage à appliquer dans le cas de chaque configuration d'antenne d'équipement d'utilisateur.

**7.** Procédé selon la revendication 6, dans lequel la communication comprend :

la transmission d'un message de diffusion à un équipement d'utilisateur fonctionnant dans ledit réseau de communication sans fil.

**8.** Procédé selon la revendication 6, comprenant : la réception d'une indication de capacité de configuration d'antenne dudit équipement d'utilisateur et la communication de ladite indication de biais de sélection de cellule à un équipement d'utilisateur fonctionnant dans ledit réseau de communication sans fil en fonction de ladite capacité de configuration d'antenne dudit équipement d'utilisateur.

**9.** Procédé selon la revendication 8, dans lequel la communication comprend :

la transmission d'un message commun d'un équipement d'utilisateur fonctionnant dans ledit réseau de communication sans fil à un équipement d'utilisateur déterminé comme ayant une capacité de configuration d'antenne multiple.

**10.** Procédé selon la revendication 6, comprenant : la réception d'une indication de configuration d'antenne qui est mise en oeuvre par ledit équipement d'utilisateur, et la communication de ladite indication de biais de sélection de cellule à un équipement d'utilisateur fonctionnant dans ledit réseau de communication sans fil en fonction de ladite configuration d'antenne qui est mise en oeuvre par ledit équipement d'utilisateur.

**11.** Procédé selon la revendication 10, dans lequel la communication comprend :

la transmission d'une messagerie dédiée à un équipement d'utilisateur déterminé comme fonctionnant dans ledit réseau de communication sans fil avec une configuration d'antenne d'équipement d'utilisateur particulière.

**12.** Produit de programme informatique exploitable, lorsqu'il est exécuté sur un ordinateur, pour effectuer le procédé selon l'une quelconque des revendications 6 à 11.

13. Noeud de commande exploitable pour mettre en oeuvre un procédé de biais de sélection de cellule dans un réseau de communication sans fil, ledit noeud de commande de réseau comprenant :

une logique de biais exploitable pour déterminer, pour une cellule dans ledit réseau de communication sans fil, une indication de biais de sélection de cellule associée à une configuration d'antenne d'équipement d'utilisateur ; et
une logique de communication exploitable pour communiquer ladite indication de biais de sélection de cellule à un équipement d'utilisateur fonctionnant dans ledit réseau de communication sans fil, et où ladite indication de biais de sélection de cellule comprend un décalage à appliquer dans le cas de chaque configuration d'antenne d'équipement d'utilisateur.

⬚ Macro cell coverage                  ▨ CRE region

▨ SHO region                         ▨ LPN coverage

UL Boundary    DL Boundary

Macro Cell

UL-DL Imbalance

LPN

UE

HetNet Deployment

## FIG. 1

⬚ Macro cell coverage        ◨ CRE region for dual antenne

                              ▨ CRE region for single antenne

▨ SHO region                         ▨ LPN coverage

UL Boundary    DL Boundary

Macro Cell

LPN

UE1  UE2

UL-DL
Imbalance

## FIG. 2

**EP 2 869 630 B1**

**Patent documents cited in the description**

- WO 2012142876 A